# EUROPÄISCHE PATENTSCHRIFT

(11) **EP 3 287 647 B1**
(45) Veröffentlichungstag und Bekanntmachung des Hinweises auf die Patenterteilung: **29.04.2020**
(21) Anmeldenummer: 16185491.4
(22) Anmeldetag: 24.08.2016
(51) Int. Cl.: F16B 15/00, B25D 1/04, E01B 3/06

(54) **KLAMMERANORDNUNG, SETZGERÄTSYSTEM UND VERWENDUNG EINES SETZGERÄTESYSTEMS**
BRACKET ARRANGEMENT, SYSTEM FOR SETTING SAID BRACKET AND USE OF SAID SYSTEM
ENSEMBLE AGRAFE, SYSTÈME DE POSE DE LADITE AGRAFE ET UTILISATION DUDIT SYSTÈME

(43) Veröffentlichungstag der Anmeldung: 28.02.2018
(73) Patentinhaber: Latschbacher GmbH, 4484 Kronstorf (AT)
(72) Erfinder: Latschbacher, Klaus, 4484 Kronstorf (DE)
(74) Vertreter: Patentanwälte Magenbauer & Kollegen Partnerschaft mbB

(56) Entgegenhaltungen:
- EP-A1- 0 248 928
- EP-B1- 1 317 632
- WO-A1-91/14057
- DE-A1- 2 756 419
- FR-A1- 2 638 555
- FR-A1- 2 879 118
- US-A- 1 758 822
- US-A- 5 244 328
- US-A1- 2004 187 425

## Beschreibung

Die Erfindung betrifft eine Klammeranordnung für Baumstämme, ein Setzgerätesystem, das ein Setzgerät, eine Klammeranordnung und ein Klammermagazin umfasst sowie die Verwendung eines solchen Setzgerätesystems zur Sicherung einer Schnittfläche eines Baumstamms.

Aus der EP 1 317 632 B1 ist ein System zum Minimieren von Endsplittern in einem Baumstamm bekannt, das eine Antizersplitterungsvorrichtung mit einem zentralen Stegabschnitt, einem Paar von Endstegabschnitten, die nahe deren Mittelpunkte mit sich gegenüberliegenden Enden des zentralen Stegabschnitts verbunden sind, um die Antizersplitterungsvorrichtung mit einer im Wesentlichen L-förmigen Draufsichtkonfiguration bereitzustellen, bekannt. Dabei haben die Stegabschnitte entgegengesetzt abgewandte erste und zweite Ränder, wobei die ersten Seitenränder sich verjüngen, um eine Schneidkante zu definieren, um das Einbringen der Antizersplitterungsvorrichtung in den Baumstamm zu erleichtern, wobei die zweiten Seitenränder im Wesentlichen planparallel und parallel zu der Schneidkante sind, um eine Eintreibeoberfläche zu definieren, auf die eine Kraft auf die Antizersplitterungsvorrichtung zum Einbringen der Schneidkante in den Baumstamm aufgebracht werden kann, und wenigstens zwei Vorsprüngen, die von der Eintreiboberfläche abstehen sowie einem Eintreibinstrument zum Einbringen der Antizersplitterungsvorrichtung in einen Baumstamm mit einer Eintreiboberfläche mit einer kreisförmigen Nut mit einem Außendurchmesser und einem Innendurchmesser, wobei die kreisförmige Nut die wenigstens zwei Vorsprünge aufnimmt, die dimensioniert und angeordnet sind zum gleitbaren Reibungskontakt mit entweder dem Außendurchmesser oder dem Innendurchmesser und wobei die kreisförmige Nut es ermöglicht, dass die Antizersplitterungsvorrichtung gedreht werden kann, während sie mit der Eintreiboberfläche in Reibungskontakt steht, um die gewünschte Position der Antizersplitterungsvorrichtung in Bezug auf den Baumstamm zu erreichen.

Die Aufgabe der Erfindung besteht darin, eine Klammeranordnung, ein Setzgerätesystem sowie eine Verwendung eines Setzgerätesystems anzugeben, die eine vereinfachte Bedienung ermöglichen.

Diese Aufgabe wird für eine Klammeranordnung mit den Merkmalen des Anspruchs 1 gelöst. Hierbei ist vorgesehen, dass die Klammeranordnung einen Grundkörper umfasst, an dem wenigstens drei beabstandet zueinander angeordnete Haltezungen ausgebildet sind, wobei der Grundkörper und die Haltezungen als Schneiden in einer gemeinsamen Schneidrichtung ausgerichtet sind und wobei am Grundkörper und/oder an wenigstens einer Haltezunge wenigstens zwei Rastnasen für eine lösbare Verbindung mit einem Setzgerät ausgebildet sind.

Durch die wenigstens drei beabstandet zueinander angeordneten Haltezungen kann bei der erfindungsgemäßen Klammeranordnung abweichend vom Stand der Technik, bei dem lediglich zwei beabstandet zueinander angeordnete Haltezungen vorgesehen sind, eine vorteilhafte Ausrichtung der Klammeranordnung während der Durchführung des Eintreibvorgangs in die Schnittfläche des Baumstamms erzielt werden. Die Haltezungen stehen vorzugsweise beidseitig vom Grundkörper ab. Besonders vorteilhaft ist, dass die dritte Haltezunge, die zwischen den beiden anderen Haltezungen angeordnet ist, für eine zusätzliche Stabilisierung der Ausrichtung des Grundkörpers gegenüber der Schnittfläche des Baumstamms sorgt. Hierdurch wird insbesondere eine unerwünschte Torsion des Grundkörpers, der wie die Haltezungen den vom Setzgerät eingeleiteten Schneidkräften ausgesetzt ist, zumindest weitestgehend, insbesondere vollständig, verhindert. Dadurch wird insbesondere die Situation vermieden, dass der Grundkörper während des Eintreibvorgangs zumindest bereichsweise soweit deformiert wird, dass er nicht mehr in einer gemeinsamen Schneidrichtung mit den Haltezungen ausgerichtet ist. Hieraus resultiert eine Verstärkung der Torsionswirkung, die im Ergebnis zu einem mangelhaften Eintreibvorgang für die Klammeranordnung in die Schnittfläche des Baumstamms führt. Demgegenüber gewährleisten die wenigstens drei beabstandet zueinander angeordneten Haltezungen bei geeigneter Verteilung längs einer Erstreckung des Grundkörpers, dass der Grundkörper während der Durchführung des Eintreibvorgangs zuverlässig abgestützt wird und keine unerwünschte Deformation auftritt, die ein angestrebtes, insbesondere vollständiges, Eintreiben der Klammeranordnung in die Schnittfläche des Baumstamms verhindern würde. Die wenigstens zwei Rastnasen der Klammeranordnung können wahlweise ausschließlich an den Haltezungen oder ausschließlich am Grundkörper vorgesehen sein. Alternativ kann auch vorgesehen sein, dass eine der beiden Rastnasen am Grundkörper vorgesehen ist, während die andere Rastnase an einer der Haltezungen angebracht ist. Besonders bevorzugt ist vorgesehen, dass die Klammeranordnung als Kunststoffspritzgussteil ausgebildet ist und/oder dass der Grundkörper und die daran angebrachten Haltezungen einstückig ausgebildet sind.

Vorteilhafte Weiterbildungen der Erfindung sind Gegenstand der Unteransprüche.

Zweckmäßig ist es, wenn die Haltezungen von einer größten Oberfläche des Grundkörpers abragen. Hierdurch wird die gewünschte Stützwirkung für den als, vorzugsweise schlanke, Schneide ausgebildeten Grundkörper gewährleistet, da auf die Klammeranordnung eingeleitete Schneidkräfte über die Haltezungen in die Schnittfläche des Baumstamms eingeleitet werden können und nicht zu der unerwünschten Deformation des Grundkörpers führen. Bei einer Ausgestaltung der größten Oberfläche als Ebene ist eine Flächennormale auf diese Ebene rechtwinklig zur Schneidrichtung ausgerichtet und die Haltezunge ist vorzugsweise längs der Flächennormalen erstreckt. Bei einer Ausgestaltung der größten Oberfläche als zumindest bereichsweise gekrümmte und/oder stufenartig ausgebildete Fläche sind zumindest die überwiegende Anzahl von Flächenabschnitten, die die größte Oberfläche des Grundkörpers bestimmten, mit ihren jeweiligen Flächennormalen rechtwinklig oder zumindest nahezu rechtwinklig zur Schneidrichtung ausgerichtet und die Haltezunge ist vorzugsweise längs derjenigen Flächennormalen erstreckt, die von der Fläche bestimmt wird, an der die Haltezunge angeordnet ist.

Vorteilhaft ist es, wenn der Grundkörper und/oder die Haltezunge einen prismatisch ausgebildeten Trägerabschnitt und einen an den Trägerabschnitt angrenzenden Schneidenabschnitt aufweisen. Der Trägerabschnitt und der Schneidenabschnitt sind einstückig miteinander ausgebildet und bilden eine Schneide, durch die sowohl der Grundkörper als auch die Haltezunge geometrisch beschrieben werden kann. Der Trägerabschnitt dieser Schneide weist längs eines Erstreckungspfads, insbesondere längs einer Erstreckungsgeraden, in Querschnittsebenen, die senkrecht zum Erstreckungspfad ausgerichtet sind, jeweils konstante Querschnitte auf. Vorzugsweise ist vorgesehen, dass ein Profil oder Querschnitt für den Grundkörper und/oder die Haltezunge zwei längste Kanten aufweist, die zumindest im Wesentlichen parallel zueinander ausgerichtet sind, sodass der Grundkörper und/oder die Haltezunge jeweils eine keilförmige oder planparallel plattenförmige Schneide ausbilden, an deren unterer Schmalseite der Schneidenabschnitt ausgebildet ist. Der Schneidenabschnitt kann wie der Trägerabschnitt eine prismatische Geometrie aufweisen, kann jedoch auch abweichend geformt sein, um insbesondere ein vorteilhaft leichtes Eindringen in die Stirnfläche des Baumstamms während des Eintreibvorgangs zu ermöglichen.

Bevorzugt ist vorgesehen, dass der Trägerabschnitt des Grundkörpers und/oder der Haltezunge eine dem Schneidenabschnitt entgegengesetzte, insbesondere eben ausgebildete, Schmalseite aufweist, die für eine Einleitung von Schneidkräften auf dem Grundkörper und/oder die Haltezunge ausgebildet ist. Diese Schmalseite, die auch als Schneidenrücken bezeichnet werden kann, kommt mit einer korrespondierenden Oberfläche des Setzgeräts in Kontakt, von dem die Schneidkräfte auf die Klammeranordnung übertragen werden. Um einen möglichst gleichförmigen Kraftfluss vom Setzgerät in die Klammeranordnung zu gewährleisten, ist es vorzugsweise vorgesehen, dass die Schmalseite eben ausgebildet ist und dass das Setzgerät eine korrespondierende, eben ausgebildete Kontaktfläche aufweist. Besonders bevorzugt ist vorgesehen, dass eine Flächennormale auf die Schmalseite parallel zur Schneidrichtung, die vom Grundkörper und den Haltezungen bestimmt wird, ausgerichtet ist.

Bei einer vorteilhaften Weiterbildung der Erfindung ist vorgesehen, dass der Schneidenabschnitt eine wellenförmig ausgebildete Schneidkante und/oder eine wellenförmig ausgebildete Profilierung aufweist. Durch diese Maßnahme soll einerseits ein Eindringen des Schneidenabschnitts in die Schnittfläche des Baumstamms während der Durchführung des Eintreibvorgangs erleichtert werden. Dies gilt insbesondere für die wellenförmig ausgebildete Schneidkante, durch die der Schneidenabschnitt zu Beginn des Eintreibvorgangs zunächst nur punktuell auf der Schnittfläche des Baumstamms aufliegt und dort bereits mit dem Anschneiden der Schnittfläche beginnen kann, während benachbarte Bereiche des Schneidenabschnitts erst dann in Kontakt mit der Schnittfläche des Baumstamms kommen, wenn bereits ein gewisser Eindringvorgang für die Klammeranordnung begonnen hat. Die wellenförmig ausgebildete Profilierung des Schneidenabschnitts dient zur Vermeidung von Rissbildungen in der Schnittfläche des Baumstamms, in dem die Klammeranordnung eingetrieben wird.

In weiterer Ausgestaltung der Erfindung ist vorgesehen, dass die Rastnase eine L-förmige Profilierung aufweist, wobei ein erster L-Schenkel parallel zu einer Schmalseite des Grundkörpers und/oder der Haltezunge ausgerichtet ist und wobei ein zweiter L-Schenkel mit einer vorspringenden, insbesondere keilförmig profilierten, Rastgeometrie versehen ist. Die Rastnasen, die wahlweise am Grundkörper oder an der Haltezunge an einer jeweiligen Schmalseite angeordnet sein können, dienen zur Festlegung der Klammeranordnung an einem Setzgerät. Hierbei ist die der Rastnase zugehörige Rastgeometrie für einen Eingriff in einen Hinterschnitt, der am Sitzgerät ausgebildet ist, vorgesehen. Ferner ermöglicht die Rastgeometrie ein werkzeugloses Festlegen der Klammeranordnung am Setzgerät sowie ein ebenfalls werkzeugloses Abnehmen des Setzgeräts von der Klammeranordnung nach dem Eintreiben in die Schnittfläche des Baumstamms.

In weiterer Ausgestaltung der Erfindung ist vorgesehen, dass eine endseitig am Grundkörper angebrachte Haltezunge eine T-förmige Profilierung mit dem Grundkörper ausbildet und/oder dass eine zwischen weiteren Haltezungen am Grundkörper angebrachte Haltezunge eine T-förmige oder kreuzförmige Profilierung ausgebildet. Bei der Beurteilung der Profilierung der Haltezungen wird jeweils die Haltezunge als solche und ein benachbarter Bereich des Grundkörpers, nicht jedoch der gesamte Grundkörper, betrachtet. Durch die T-förmige Profilierung der endseitig am Grundkörper angebrachten Haltezunge wird eine vorteilhafte Krafteinleitung von der Klammeranordnung in die Schnittfläche des Baumstamms ermöglicht. Hiermit können im Bereich des zu überbrückenden Risses in der Schnittfläche des Baumstammes auftretende Kräfte, die zu einer Fortpflanzung der Rissbildung führen könnten, in besonders günstiger Weise durch die endseitig angebrachten Haltezungen in umliegende Bereiche der Schnittfläche des Baumstamms abgeleitet werden, ohne dass hier eine zusätzliche Gefahr einer Rissbildung besteht. Die T-förmige oder kreuzförmige Profilierung der wenigstens einen weiteren Haltezunge, die zwischen den endseitig angebrachten Haltezungen am Grundkörper angeordnet ist, dient insbesondere der Abstützung des Grundkörpers während des Eintreibvorgangs, um eine unerwünschte Deformation des Grundkörpers und damit ein mangelhaftes Eintreibergebnis für die Klammeranordnung zu vermeiden.

Zweckmäßig ist es, wenn die Rastnasen an endseitig gegenüberliegend am Grundkörper angebrachten, maximal beabstandet zueinander angeordneten Haltezungen, insbesondere jeweils paarweise ausgebildet sind. Durch diese Anordnung wird einerseits eine einfache Gestaltung des Setzgeräts ermöglicht, andererseits wird hierdurch eine zuverlässige Abstützung der gesamten Klammeranordnung am Setzgerät gewährleistet, was insbesondere in der Phase des Eintreibvorgangs für die Klammeranordnung in die Schnittfläche des Baumstamms von großer Bedeutung ist.

Vorteilhaft ist es, wenn der Trägerabschnitt zumindest abschnittsweise mit einem zumindest im Wesentlichen rechteckigen Querschnitt, insbesondere mit einem rechteckigen Querschnitt, ausgebildet ist und wenn der Schneidenabschnitt entlang einer längsten Kante des Trägerabschnitts erstreckt ist. Bei einer rechteckigen Ausgestaltung des Trägerabschnitts wird ein günstiger Kompromiss zwischen dem Verhalten der Klammeranordnung während der Durchführung des Eintreibvorgangs und der nachfolgenden Nutzung der Klammeranordnung während einer Trocknungsphase für den Baumstamm erzielt. Bei einem rechteckigen Querschnitt des Trägerabschnitts sind die größten Oberflächen des Grundkörpers parallel zueinander ausgerichtet, sodass nach dem Eintreiben der Klammeranordnung in die Schnittfläche des Baumstamms gegebenenfalls vom Baumstamm auf die größten Oberflächen des Trägerabschnitts einwirkende Reaktionskräfte nicht zu einer resultierenden Kraft führen, die die Klammeranordnung wieder aus dem Baumstamm heraustreiben würden. Bei einer Ausgestaltung des Trägerabschnitts mit einem keilförmigen Querschnitt wird einerseits eine Entformung aus der Kunststoffspritzgussform erleichtet, andererseits wird hierdurch auch der Eintreibvorgang in die Schnittfläche des Baumstamms erleichtert, da das zu verdrängende Holzvolumen des Baumstamms durch die Keilwirkung des Trägerabschnitts besonders günstig verdrängt werden kann. Ein Keilwinkel für den Querschnitt des Trägerabschnitts ist vorzugsweise in einem Bereich von 0 Grad bis 5 Grad angesiedelt, den die einander entgegengesetzten größten Oberflächen des Trägerabschnitts zueinander einnehmen. Durch die Erstreckung des Schneidenabschnitts entlang der längstens Kante des Trägerabschnitts wird gewährleistet, dass entlang des gesamten Trägerabschnitts überall zumindest im Wesentlichen die gleichen Kräfte während der Durchführung des Eintreibvorgangs auftreten.

Vorzugsweise ist vorgesehen, dass jeweils endseitig gegenüberliegend am Grundkörper angebrachte Haltezungen jeweils eine kreisringabschnittsförmige, insbesondere koaxiale Profilierung aufweisen. Durch diese Profilierung wird eine Stabilisierungswirkung für die endseitigen Haltezungen ermöglicht, wodurch auch eine Torsion der endseitigen Haltezungen sowie eine Verkippung der endseitigen Haltezungen vermieden werden kann. Durch diese Maßnahme wird zudem eine Rissbildung in der Stirnfläche des Baumstamms, die durch die eingetriebene Klammeranordnung hervorgerufen werden könnte, minimiert.

Bei einer vorteilhaften Weiterbildung der Erfindung ist vorgesehen, dass jeweils endseitig gegenüberliegend am Grundkörper angebrachte Haltezungen benachbart zu ihrer jeweiligen Schneidkante mit einem Hinterschnitt, insbesondere mit einem Widerhaken, ausgebildet sind. Die Aufgabe des Hinterschnitts besteht darin, eine formschlüssige Verriegelung der Klammeranordnung im Baumstamm zu gewährleisten, um nach Beendigung des Eintreibvorgangs ein Austreiben der Klammeranordnung aus dem Baumstamm zu verhindern.

Ferner betrifft die Erfindung ein Setzgerätesystem mit einem Setzgerät zur Verarbeitung einer erfindungsgemäßen Klammeranordnung, mit einem Schlagteller, der zur zeitweiligen Festlegung der Klammeranordnung durch formschlüssige Verrastung der Rastnasen an einem Schlagteller-Außenumfang ausgebildet ist und der mit einem Griffstil verbunden ist, wobei der Griffstil und der Schlagteller derart ausgebildet sind, dass ein Schwerpunkt des Setzgeräts mittig im Griffstil angeordnet ist. Vorzugsweise ist das Setzgerät in der Art eines Hammers, insbesondere eines Schlosserhammers oder Schmiedehammers, ausgebildet und umfasst einen Griffstil, der insbesondere aus Holz oder Kunststoff hergestellt sein kann, sowie einen damit verbundenen Hammerkopf, an dem ein vorzugsweise eben, insbesondere kreiszylindrisch, ausgebildeter Schlagteller angebracht ist. Eine zur Kraftübertragung auf die Klammeranordnung dienende Oberfläche des Schlagtellers weist eine Flächennormale auf, die zumindest nahezu senkrecht zu einer Längserstreckung des Griffstils ausgerichtet ist und somit nach Anbringen einer Klammeranordnung und Durchführen einer Schwungbewegung durch einen Bediener in einer möglichst parallel zur Schnittfläche des mit der Klammeranordnung zu versehenden Baumstammes auf diese Schnittfläche auftrifft, um die Klammeranordnung in die Schnittfläche einzutreiben. Um eine vorteilhafte Bedienung des Setzgeräts auch bei einer Vielzahl von Schlagvorgängen zu gewährleisten, ist es vorgesehen, dass der Hammerkopf mit dem daran angebrachten Schlagteller derart am Griffstil angeordnet ist, dass ein im Wesentlichen vom Hammerkopf bestimmter Schwerpunkt des Setzgeräts auf einer Mittelachse oder neutralen Faser des Griffstils liegt. Angesichts des typischerweise aus einem metallischen Werkstoff hergestellten Hammerkopfs und des typischerweise aus einem Holzwerkstoff oder einem Kunststoffmaterial hergestellten Griffstils ist davon auszugehen, dass der Schwerpunkt des Setzgeräts in einem Bereich des Griffstils angeordnet ist, der allenfalls einem Drittel der Gesamtlänge des Griffstils entspricht und benachbart zum Hammerkopf angeordnet ist.

Vorteilhaft ist es, wenn zwischen dem Griffstil und dem Schlagteller eine Gelenkanordnung, insbesondere ein Kugelgelenk, ausgebildet ist. Durch die Gelenkanordnung, die eine schwenkbewegliche Lagerung des Schlagtellers gegenüber dem Griffstil ermöglicht, wird eine vorteilhafte Anpassung der Ausrichtung der Klammeranordnung beim Auftreffen auf die Schnittfläche des Baumstamms ermöglicht, da zumindest innerhalb eines durch die Gelenkanordnung, bei der es sich insbesondere um ein Kugelgelenk handeln kann, bestimmten, wenigstens einen Freiheitsgrads der Schwenkbewegung eine Ausgleichbewegung zwischen einer möglicherweise nicht optimalen Ausrichtung des Griffstils gegenüber der Schnittfläche des Baumstamms erfolgen kann.

Ferner umfasst das erfindungsgemäße Setzgerätesystem ein Klammermagazin, das einen Magazinschacht zur Aufnahme mehrerer Klammeranordnungen in einer Stapelanordnung sowie eine Federeinrichtung zur Bereitstellung einer jeweils ersten Klammeranordnung der Stapelanordnung an einer Schachtöffnung aufweist. Durch die Aufreihung mehrerer Klammeranordnungen zu einer Stapelanordnung in einem Magazinschacht eines Klammermagazins kann eine besonders kompakte Lagerung der Klammeranordnungen ermöglicht werden. Durch die im Magazinschacht angeordnete Federeinrichtung wird gewährleistet, dass die jeweils erste Klammeranordnung der Stapelanordnung an einer Schachtöffnung des Magazinschachts des Klammermagazins bereitgestellt wird und mit Hilfe des Setzgeräts aus dem Magazinschacht entnommen werden kann. Bei diesem Entnahmevorgang wird das Setzgerät vorzugsweise derart in Kontakt mit der Klammeranordnung gebracht, dass die an der Klammeranordnung angebrachten Rastnasen formschlüssig mit dem Schlagteller des Setzgeräts verrastet werden, wodurch die weitere Verarbeitung der Klammeranordnung in einfacher Weise erfolgen kann. Mit dem Entnehmen der jeweils ersten Klammeranordnung aus dem Magazinschacht wird aufgrund der Federwirkung der Federeinrichtung die jeweils nächste Klammeranordnung an die Schachtöffnung gefördert und dort von geeigneten Vorsprüngen zurückgehalten und stellt nunmehr die erste Klammeranordnung der Stapelanordnung dar. Vorzugsweise ist das Klammermagazin derart ausgebildet, dass es wenigstens 10, vorzugsweise 20, insbesondere 30 Klammeranordnungen, aufnehmen kann.

Die Aufgabe der Erfindung wird ferner durch eine Verwendung eines Setzgerätesystems, wie es im Anspruch 12 beschrieben ist, gelöst. Das Verfahren zur Verwendung des Setzgerätesystems wird zur Sicherung einer Schnittfläche eines Baumstamms eingesetzt und umfasst die Schritte: Aufnehmen einer Klammeranordnung mit dem Setzgerät aus dem Klammermagazin durch formschlüssige Verrastung der Rastnasen der Klammeranordnung mit dem Außenumfang des Schlagtellers, Entnehmen der Klammeranordnung aus dem Klammermagazin und Eintreiben der Klammeranordnung in eine Schnittfläche eines Baumstamms, insbesondere derart, dass beabstandet am Grundkörper angebrachte Haltezungen beidseitig eines Risses in der Schnittfläche des Baumstammes zu liegen kommen und dass der Grundkörper den Riss überspannt.

Eine vorteilhafte Ausführungsform der Erfindung ist in der Zeichnung dargestellt. Dabei zeigt:
- Figur 1: eine perspektivische Draufsicht auf eine Klammeranordnung,
- Figur 2: eine Vorderansicht auf die Klammeranordnung gemäß der Figur 1,
- Figur 3: eine Seitenansicht auf die Klammeranordnung gemäß den Figuren 1 und 2,
- Figur 4: eine Ansicht von oben auf die Klammeranordnung gemäß den Figuren 1 bis 3,
- Figur 5: eine Ansicht von unten auf die Klammeranordnung gemäß den Figuren 1 bis 4, und
- Figur 6: eine schematische Darstellung eines Setzgerätesystems.

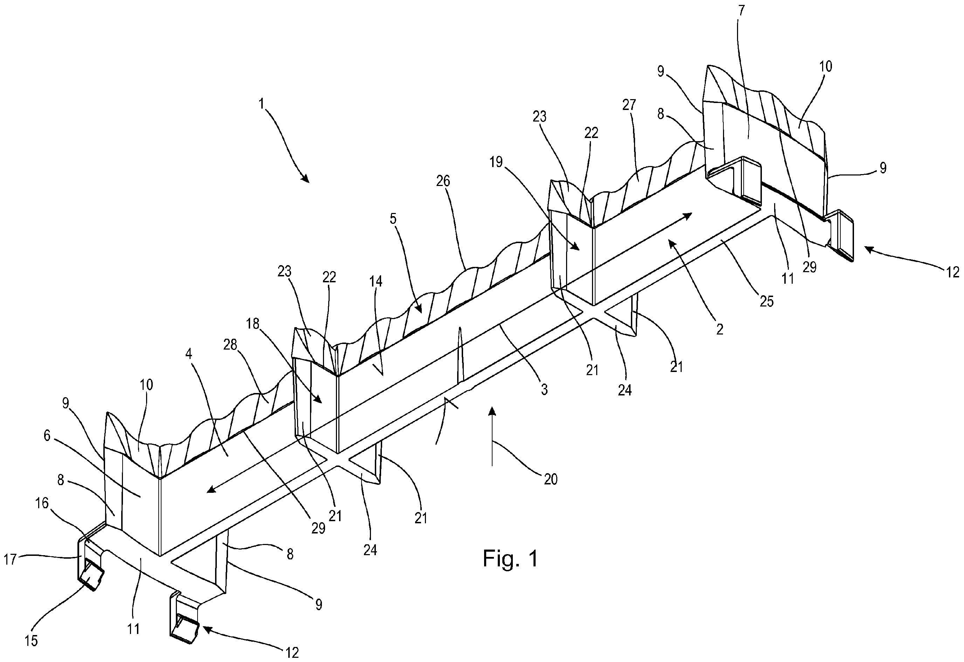

Eine in den Figuren 1 bis 5 dargestellte Klammeranordnung ist zum Eintreiben in eine nicht dargestellte Schnittfläche eines ebenfalls nicht dargestellten Baumstamms vorgesehen, um eine Rissausbildung von eventuell in der Schnittfläche vorhandenen Rissen längs des Baumstamms zu verhindern oder zumindest zu vermindern. Vorzugsweise ist vorgesehen, dass die Klammeranordnung einstückig, insbesondere als Kunststoffspritzgussteil, hergestellt ist, um einerseits einen günstigen Kraftfluss innerhalb der Klammeranordnung zu gewährleisten und andererseits eine kostengünstige Herstellung sicherzustellen. Ferner ist vorgesehen, die Klammeranordnung mit Hilfe eines nicht näher dargestellten Setzgeräts zu verarbeiten, bei dem es sich insbesondere um eine Sonderform eines Hammers handeln kann, um auch hier eine kostengünstige und praxistaugliche Lösung anbieten zu können.

Als Ausgangsmaterial für die Klammeranordnung kommen vorzugsweise hochfeste, insbesondere verstärkte - also faserverstärkte, Kunststoffe in Frage. Derartige Kunststoffe ermöglichen zum einen eine schlanke Gestaltung der Klammeranordnung 1 und führen zum anderen weder bei der Weiterverarbeitung der Baumstämme zu Beschädigungen der Werkzeuge.

Die Klammeranordnung 1 umfasst rein exemplarisch einen Grundkörper 2, der leistenartig ausgebildet ist und rein exemplarisch entlang einer Erstreckungsachse 3 einen prismatisch ausgebildeten, mit rechteckigem Querschnitt versehenen Trägerabschnitt 4 sowie einen an den Trägerabschnitt 4 stirnseitig angrenzenden Schneidenabschnitt 5 umfasst. Jeweils endseitig am Grundkörper 2 sind quer zur Erstreckungsachse 3 ausgerichtete Haltezungen 6, 7 angeordnet, die jeweils mit einem nicht näher bezeichneten, direkt angrenzenden Abschnitt des Grundkörpers 2 eine zumindest im Wesentlichen T-förmige Profilierung 30 ausbilden. Exemplarisch ist vorgesehen, dass die beiden Haltezungen 6, 7 jeweils als Kreisringabschnitte ausgebildet sind, die parallel zueinander ausgerichtete Mittelachsen aufweisen, die jedoch in den Figuren nicht dargestellt sind. An umfangsseitigen Stirnflächen der Haltezungen 6, 7 sind jeweils keilförmige Endbereiche 8 ausgebildet, wobei Außenkanten 9 der Endbereiche 8 jeweils parallel zueinander ausgerichtet sind. Die Haltezungen 6, 7 sind in gleicher Weise wie der Grundkörper 2 mit Schneidenabschnitten 10 versehen, die in gleicher Weise wie der Schneidenabschnitt 5 ausgebildet sind und nachstehend noch näher beschrieben werden. Angrenzend an eine dem Schneidenabschnitt 10 entgegengesetzte, rein exemplarisch eben ausgebildete Schmalseite oder Stirnfläche 11 sind an den Haltezungen 6 und 7 jeweils nach außen abragende, L-förmig profilierte Rastnasen 12 vorgesehen, wobei die Rastnasen 12 nach innen vorspringende, keilförmig profilierte Rastgeometrien 15 umfassen. Beispielhaft ist vorgesehen, dass ein erster, insbesondere kürzerer, L-Schenkel 16 der Rastnase 12 parallel zur Stirnfläche 11 der jeweiligen Haltezunge 6 oder 7 ausgerichtet ist, während ein zweiter, insbesondere längerer, L-Schenkel 17 zumindest im Wesentlichen senkrecht zur Stirnfläche 11 der jeweiligen Rastnase 6, 7 ausgerichtet ist und die nach innen abragende Rastgeometrie 15 trägt.

Die Hauptaufgabe der endseitig angebrachten Haltezungen 6, 7 und des Grundkörpers 2 besteht darin, nach Eintreiben der Klammeranordnung 1 in eine nicht dargestellte Schnittfläche eines Baumstamms eine lokale Stabilisierung der Schnittfläche zu gewährleisten. Insbesondere sollen bei einem Trocknungsvorgang des Baumstamms auftretende Kräfte, die durch innere Spannungen im Baumstamm auftreten können, aufgefangen werden, womit einer Rissausbreitung ausgehend von der Schnittfläche des Baumstamms in das Innere des Baumstamms entgegengewirkt werden soll. Grundsätzlich wird davon auszugehen sein, dass während des Austrocknens des Baumstamms durch die Materialschrumpfung insbesondere Zugkräfte auftreten, die vom Baumstamm in die Haltezungen 6, 7 eingeleitet werden und zu Zugspannungen im Grundkörper 2 führen.

Um ein vorteilhaftes Eintreiben der Klammeranordnung in den nicht näher dargestellten Baumstamm zu unterstützen sind bei der in den Figuren 1 bis 5 dargestellten Ausführungsform zwei zusätzliche Haltezungen 18, 19 vorgesehen, die jeweils rein exemplarisch mit ihrer größten Erstreckung quer zur Erstreckungsachse 3 des Grundkörpers 2 ausgerichtet sind und dadurch jeweils mit angrenzenden Bereichen des Grundkörpers eine kreuzförmige Profilierung 31 ausbilden. Die Aufgabe der Haltezungen 18, 19 besteht darin, den leistenförmig ausgebildeten Grundkörper 2 während des Eintreibvorgangs in die Schnittfläche des Baumstamms abzustützen und somit eine Torsion des Grundkörpers 2 zu verhindern. Eine derartige Torsion würde im Extremfall dazu führen, dass eine Ausrichtung des schneidenförmig ausgebildeten Grundkörpers 2 nicht mehr mit der Ausrichtung der ebenfalls schneidenförmig ausgebildeten Haltezungen 6, 7 übereinstimmt. Hierdurch wären diese nicht mehr in einer gemeinsamen, durch den Pfeil 20 in der Figur 1 symbolisierten Schneidrichtung ausgerichtet und es könnte der Fall auftreten, dass die Klammeranordnung möglicherweise schräg in die Schnittfläche des Baumstamms eingetrieben wird oder während des Eintreibvorgangs so stark beschädigt wird, dass sie gar nicht vollständig in die Schnittfläche des Baumstamms eingetrieben werden kann. Rein exemplarisch sind die Haltezungen 18, 19 wie die Haltezungen 6, 7 jeweils stirnseitig mit keilförmigen Endbereichen 21 versehen und weisen ferner an einer ersten Schmalseite 22 jeweils einen Schneidenabschnitt 23 auf, der vorzugsweise genauso wie die Schneidenabschnitte 10 und 5 geformt ist.

Eine zur ersten Schmalseite 22 entgegengesetzte zweite Schmalseite 24 bildet zusammen mit der auch als Stirnfläche 11 bezeichneten Schmalseite der Haltezungen 6, 7 sowie einer Schmalseite 25 des Grundkörpers 2 eine Schlagfläche, die für eine Einleitung von Druckkräften auf die Klammeranordnung 1 ausgebildet ist. Die Klammeranordnung 1 kann bei einer Anlage der Schneidenabschnitte 5, 10 sowie 23 an einer nicht dargestellten Schnittfläche eines Baumstamms mit Hilfe der auf die Schmalseiten 11, 24, 25 einwirkenden Druckkräfte in den Baumstamm eingetrieben werden.

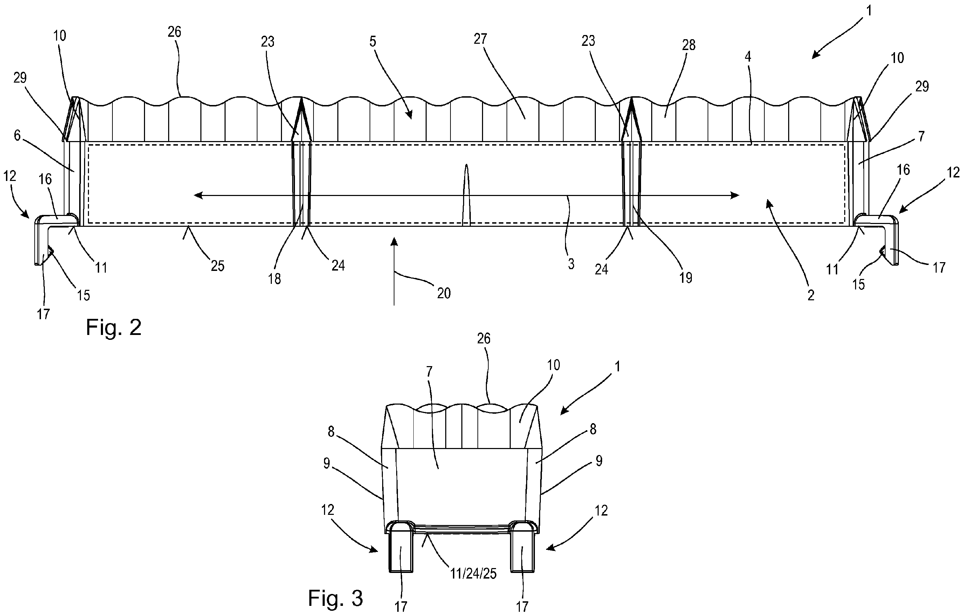

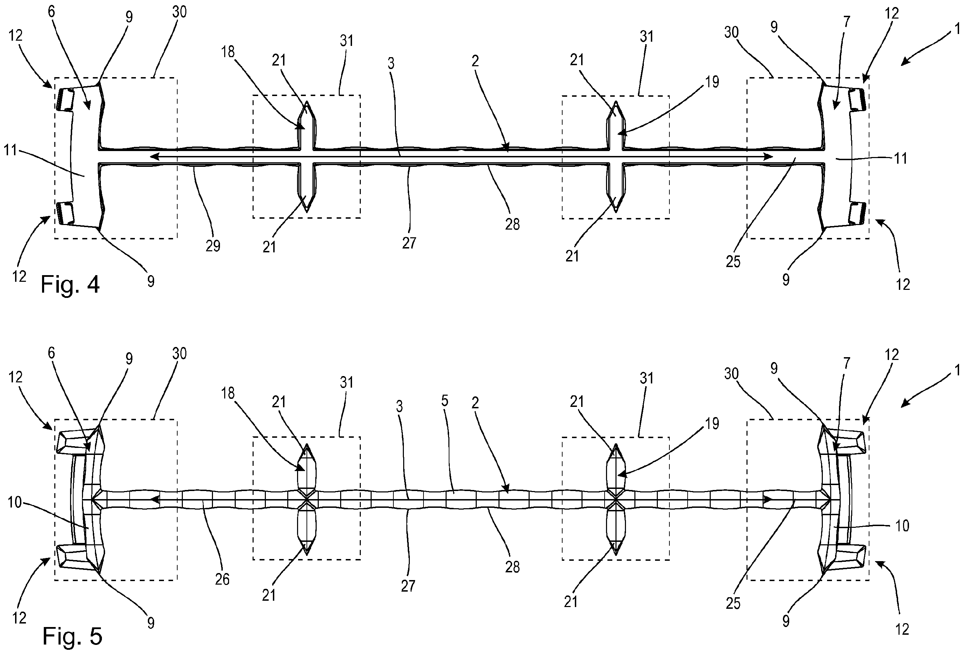

Wie aus den Figuren 1 bis 3 sowie 5 entnommen werden kann, sind die Schneidenabschnitte 5, 10, 23 rein exemplarisch in zweifacher Hinsicht wellenförmig ausgebildet. Zum einen ist eine spitz zulaufende Schneidenkante 26 wellenförmig ausgebildet, wie dies insbesondere aus der Vorderansicht gemäß der Figur 2 sowie der Seitenansicht gemäß der Figur 3 zu entnehmen ist. Ferner sind die Schneidenabschnitte 5, 10, 23 in Querschnittsebenen, die parallel zur Schmalseite 25 des Grundkörpers ausgerichtet sind, ebenfalls wellenförmig profiliert, wie dies insbesondere aus der Ansicht von unten gemäß der Figur 5 zu erkennen ist. Dabei ist beispielhaft vorgesehen, dass die Schneidenabschnitte 5, 10, 23 jeweils als Abfolge von konvexen und konkaven Oberflächenabschnitten 27, 28 ausgebildet sind, wobei die jeweils konvex ausgebildeten Oberflächenabschnitte 27 am Übergang zum Trägerabschnitt 4 zumindest geringfügig abragend ausgebildet sind, wie dies insbesondere aus der perspektivischen Darstellung der Figur 1 zu erkennen ist. Hierdurch werden gewissermaßen kleine Widerhaken 29 ausgebildet, die ein unerwünschtes Herausgleiten der Klammeranordnung 1 aus dem Baumstamm nach dem Eintreibvorgang verhindern sollen. In gleicher Weise gilt dies auch für die Schneidenabschnitte 10, die an den Haltezungen 6, 7 ausgebildet sind.

Um eine günstige Herstellweise für die Klammeranordnung im Kunststoffspritzgussverfahren zu verwirklichen, sind sowohl der Trägerabschnitt 4 als auch die Haltezungen 18, 19 mit einer Ausformschräge versehen, so dass sich sowohl die Haltezungen 18, 19 auch als der Trägerabschnitt 4 in Richtung der Schmalseiten 24, 25 geringfügig verjüngen. Diese geringfügige Keilgeometrie, die insbesondere für die Haltezungen 18, 19 aus der Figur 2 gut hervorgeht, bewirkt zudem auch eine besonders zuverlässige Verankerung der Klammeranordnung 1 im Holz des Baumstamms. Rein exemplarisch ist ferner vorgesehen, dass auch die Schneidenabschnitte 23 der Haltezungen 18, 19 mit ihren konvexen Oberflächenabschnitten 27 Widerhaken 29 ausbilden.

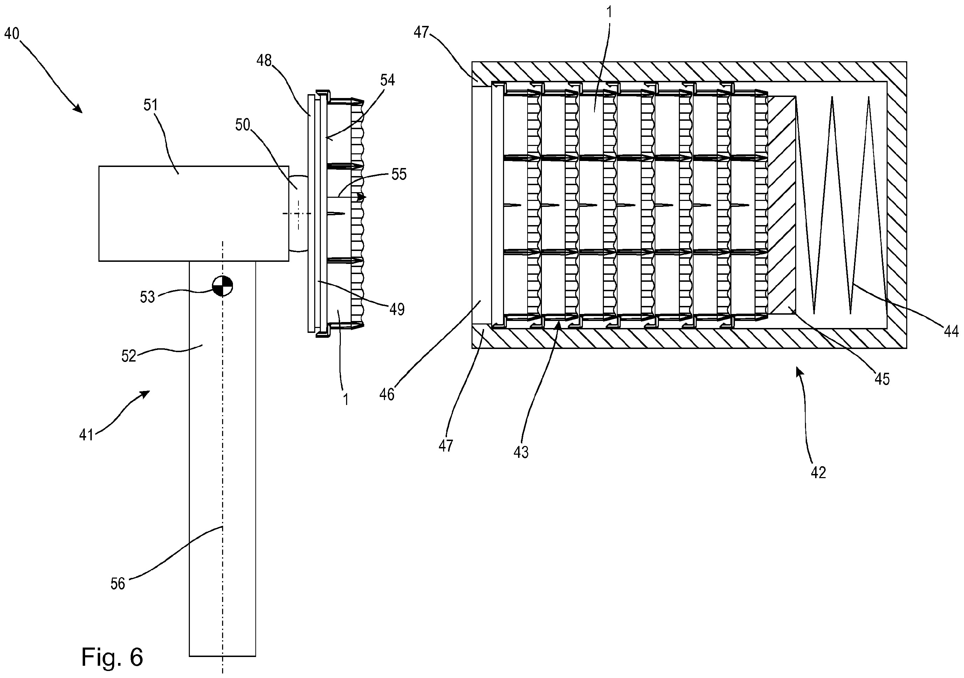

Ein schematisch in der Figur 6 dargestelltes Setzgerätesystem 40 umfasst ein hammerartig ausgebildetes Setzgerät 41, ein Klammermagazin 42 sowie mehrere Klammeranordnungen 1.

Das Klammermagazin 42 weist einen Magazinschacht 43 zur Aufnahme mehrerer Klammeranordnungen 1 in einer Stapelanordnung sowie eine Federeinrichtung 44 mit zugeordneter Druckplatte 45 zur Bereitstellung einer jeweils ersten Klammeranordnung der Stapelanordnung an einer auch als Schachtöffnung bezeichneten Ausnehmung 46 des Klammermagazin 42. Durch die Aufreihung mehrerer Klammeranordnungen 1 zu einer Stapelanordnung im Magazinschacht 43 des Klammermagazins 42 kann eine besonders kompakte Lagerung der Klammeranordnungen 1 ermöglicht werden. Durch die im Magazinschacht 43 angeordnete Federeinrichtung 44 wird die jeweils erste Klammeranordnung 1 der Stapelanordnung gegen Vorsprünge 47 an der Ausnehmung 46 des Klammermagazins 42 bereitgestellt wird und kann mit Hilfe des Setzgeräts 41 aus dem Magazinschacht 43 entnommen werden kann. Bei diesem Entnahmevorgang wird das Setzgerät 41 vorzugsweise seitlich in die Ausnehmung 46 eingeschoben und somit derart in Kontakt mit der Klammeranordnung 1 gebracht, dass die an der Klammeranordnung 1 angebrachten Rastnasen 12 formschlüssig mit einem exemplarisch kreiszylindrisch ausgebildeten Schlagteller 48 des Setzgeräts 41 verrastet werden.

Mit dem Entnehmen der jeweils ersten Klammeranordnung 1 aus dem Magazinschacht 43 wird aufgrund der Federwirkung der Federeinrichtung 44 die jeweils nächste Klammeranordnung 1 gegen die Vorsprünge 47 gepresst und stellt nunmehr die erste Klammeranordnung 1 dar.

Das Setzgerät 41 umfasst zusätzlich zum Schlagteller 48, der zur zeitweiligen Festlegung der Klammeranordnung 1 durch formschlüssige Verrastung der Rastnasen 12 einen zirkular umlaufenden, beispielhaft nutförmig ausgebildeten Hinterschnitt 49 aufweist, ein Kugelgelenk 50, einen Hammerkopf 51 sowie einen Griffstil 52. Das zwischen dem Schlagteller 48 und dem Hammerkopf 51 angeordnete Kugelgelenk 50 ermöglicht eine schwenkbewegliche Relativbewegung des Schlagtellers 48 gegenüber dem Hammerkopf 51 und ermöglicht somit eine vorteilhafte Ausrichtung des Schlagtellers 48 mit der daran angebrachten Klammeranordnung 1 gegenüber einer nicht dargestellten Schnittfläche eines Baumstamms.

Der Griffstil 52, der Hammerkopf 51 und der Schlagteller 48 sind derart ausgebildet sind, dass ein Schwerpunkt 53 des Setzgeräts 41 mittig im Griffstil 52 liegt.

Eine zur Kraftübertragung auf die Klammeranordnung 1 dienende Oberfläche 54 des Schlagtellers 48 weist eine Flächennormale 55 auf, die zumindest nahezu senkrecht zu einer Längserstreckung 56 des Griffstils 52 ausgerichtet ist und somit nach Anbringen einer Klammeranordnung 1 und Durchführen einer Schwungbewegung durch einen Bediener in einer möglichst parallel zur nicht dargestellten Schnittfläche des mit der Klammeranordnung 1 zu versehenden Baumstammes auf diese Schnittfläche auftrifft, um die Klammeranordnung 1 in die Schnittfläche einzutreiben.

## Patentansprüche

1. Klammeranordnung für Baumstämme, mit einem Grundkörper (2), an dem wenigstens drei beabstandet zueinander angeordnete Haltezungen (6, 7, 18, 19) ausgebildet sind, wobei der Grundkörper (2) und die Haltezungen (6, 7, 18, 19) als Schneiden in einer gemeinsamen Schneidrichtung (20) ausgerichtet sind, und wobei am Grundkörper (2) und/oder an wenigstens einer Haltezunge (6, 7, 18, 19) wenigstens zwei Rastnasen (12) für eine lösbare Verbindung mit einem Setzgerät ausgebildet sind.

2. Klammeranordnung nach Anspruch 1, **dadurch gekennzeichnet, dass** die Haltezungen (6, 7, 18, 19) von einer größten Oberfläche des Grundkörpers (2) abragen.

3. Klammeranordnung nach Anspruch 1 oder 2, **dadurch gekennzeichnet, dass** der Grundkörper (2) und/oder die Haltezunge (6, 7, 18, 19) einen prismatisch ausgebildeten Trägerabschnitt (4) und einen an den Trägerabschnitt (4) angrenzenden Schneidenabschnitt (5, 10, 23) aufweisen.

4. Klammeranordnung nach Anspruch 3, **dadurch gekennzeichnet, dass** der Trägerabschnitt (4) des Grundkörpers (2) und/oder der Haltezunge (6, 7, 18, 19) eine dem Schneidenabschnitt (5, 10, 23) entgegengesetzte, insbesondere eben ausgebildete, Schmalseite (11, 24, 25) aufweist, die für eine Einleitung von Schneidkräften auf den Grundkörper (2) und/oder die Haltezunge (6, 7, 18, 19) ausgebildet ist.

5. Klammeranordnung nach Anspruch 3 oder 4, **dadurch gekennzeichnet, dass** der Schneidenabschnitt (5, 10, 23) eine wellenförmig ausgebildete Schneidkante (26) und/oder eine wellenförmig ausgebildete Profilierung (27, 28) aufweist.

6. Klammeranordnung nach einem der vorhergehenden Ansprüche, **dadurch gekennzeichnet, dass** die Rastnase (12) eine L-förmige Profilierung aufweist, wobei ein erster L-Schenkel (16) parallel zu einer Schmalseite (11, 24, 25) des Grundkörpers (2) und/oder der Haltezunge (6, 7, 18, 19) ausgerichtet ist und wobei ein zweiter L-Schenkel (17) mit einer vorspringenden, insbesondere keilförmig profilierten, Rastgeometrie (15) versehen ist.

7. Klammeranordnung nach einem der vorhergehenden Ansprüche, **dadurch gekennzeichnet, dass** eine endseitig am Grundkörper (2) angebrachte Haltezunge (6, 7) eine zumindest im Wesentlichen T-förmige Profilierung (30) mit dem Grundkörper (2) ausbildet und/oder dass eine zwischen weiteren Haltezungen (6, 7, 18, 19) am Grundkörper (2) angebrachte Haltezunge (18, 19) eine T-förmige oder kreuzförmige Profilierung (31) ausbildet.

8. Klammeranordnung nach einem der vorhergehenden Ansprüche1, **dadurch gekennzeichnet, dass** die Rastnasen (12) an endseitig gegenüberliegend am Grundkörper (2) angebrachten, maximal beabstandet zueinander angeordneten Haltezungen (6, 7), insbesondere jeweils paarweise, ausgebildet sind.

9. Klammeranordnung nach einem der vorhergehenden Ansprüche, **dadurch gekennzeichnet, dass** der Trägerabschnitt (4) zumindest abschnittweise mit einem rechteckigen oder keilförmigen Querschnitt ausgebildet ist und dass der Schneidenabschnitt (5) entlang einer längsten Kante des Trägerabschnitts (4) erstreckt ist.

10. Klammeranordnung nach einem der vorhergehenden Ansprüche, **dadurch gekennzeichnet, dass** jeweils endseitig gegenüberliegend am Grundkörper (2) angebrachte Haltezungen (6, 7) jeweils eine kreisringabschnittsförmige, insbesondere koaxiale Profilierung aufweisen.

11. Klammeranordnung nach einem der vorhergehenden Ansprüche, **dadurch gekennzeichnet, dass** jeweils endseitig gegenüberliegend am Grundkörper (2) angebrachte Haltezungen (6, 7) benachbart zu ihrer jeweiligen Schneidkante (10) mit einem Hinterschnitt, insbesondere mit einem Widerhaken, ausgebildet sind.

12. Setzgerätesystem mit einem Setzgerät zur Verarbeitung einer Klammeranordnung (1) nach einem der Ansprüche 1 bis 11, mit einem Schlagteller (48), der zur zeitweiligen Festlegung der Klammeranordnung (1) durch formschlüssige Verrastung der Rastnasen (12) an einem Schlagteller-Außenumfang (48) ausgebildet ist und der mit einem Griffstiel (52) verbunden ist, wobei der Griffstiel (52) und der Schlagteller (48) derart ausgebildet sind, dass ein Schwerpunkt (53) des Setzgeräts (41) mittig im Griffstiel (52) angeordnet ist sowie mit einer Klammeranordnung (1) nach einem der Ansprüche 1 bis 11 und mit einem Klammermagazin (42), das einen Magazinschacht (43) zur Aufnahme mehrerer Klammeranordnungen (1) in einer Stapelanordnung sowie eine Federeinrichtung (44) zur Bereitstellung einer jeweils ersten Klammeranordnung (1) der Stapelanordnung an einer Schachtöffnung (46) aufweist.

13. Setzgerätesystem nach Anspruch 12, **dadurch gekennzeichnet, dass** zwischen dem Griffstiel (52) und dem Schlagteller (48) eine Gelenkanordnung (50), insbesondere ein Kugelgelenk, ausgebildet ist.

14. Verwendung eines Setzgerätesystems nach Anspruch 12 zur Sicherung einer Schnittfläche eines Baumstamms, mit den Schritten: Aufnehmen einer Klammeranordnung (1) mit dem Setzgerät (41) aus dem Klammermagazin (42) durch formschlüssige Verrastung der Rastnasen (12) der Klammeranordnung (1) mit dem Außenumfang des Schlagtellers (48), Entnehmen der Klammeranordnung (1) aus dem Klammermagazin (42) und Eintreiben der Klammeranordnung (1) in eine Schnittfläche eines Baumstamms, insbesondere derart, dass beabstandet am Grundkörper (2) angebrachte Haltezungen (6, 7) beidseitig eines Risses in der Schnittfläche des Baumstamms zu liegen kommen und dass der Grundkörper (2) den Riss überspannt.

## Claims

1. Clamp arrangement for tree trunks, with a main body (2) on which at least three retaining tongues (6, 7, 18, 19) are formed, arranged at a distance from one another, wherein the main body (2) and the retaining tongues (6, 7, 18, 19) are oriented, as blades, in a common cutting direction (20), and wherein at least two snap lugs (12) are formed on the main body (2) and/or on at least one retaining tongue (6, 7, 18, 19) to allow a detachable connection with a setting tool.

2. Clamp arrangement according to claim 1, **characterised in that** the retaining tongues (6, 7, 18, 19) project from a largest surface of the main body (2).

3. Clamp arrangement according to claim 1 or 2, **characterised in that** the main body (2) and/or the retaining tongue (6, 7, 18, 19) have a prismatic carrier section (4) and a blade section (5, 10, 23) adjoining the carrier section (4).

4. Clamp arrangement according to claim 3, **characterised in that** the carrier section (4) of the main body (2) and/or the retaining tongue (6, 7, 18, 19) has an, in particular flat, narrow side (11, 24, 25) opposite the blade section (5, 10, 23) which is designed for a transmission of cutting forces into the main body (2) and/or the retaining tongue (6, 7, 18, 19).

5. Clamp arrangement according to claim 3 or 4, **characterised in that** the blade section (5, 10, 23) has a wave-formed cutting edge (26) and/or a wave-formed profile (27, 28).

6. Clamp arrangement according to one of the preceding claims, **characterised in that** the snap lug (12) has an L-formed profile, wherein a first L-arm (16) is oriented parallel to a narrow side (11, 24, 25) of the main body (2) and/or the retaining tongue (6, 7, 18, 19) and wherein a second L-arm (17) is provided with a projecting, snap-locking geometry (15), in particular having a wedge-formed profile.

7. Clamp arrangement according to one of the preceding claims, **characterised in that** a retaining tongue (6, 7) attached at the end of the main body (2) forms an at least substantially T-formed profile (30) with the main body (2) and/or that a retaining tongue (18, 19) attached to the main body (2) between further retaining tongues (6, 7, 18, 19) forms a T-formed or cross-formed profile (31).

8. Clamp arrangement according to one of the preceding claims, **characterised in that** the snap lugs (12) are formed, in particular in pairs, on retaining tongues (6, 7) attached at opposite ends of the main body (2), arranged at a maximum distance from one another.

9. Clamp arrangement according to one of the preceding claims, **characterised in that** the carrier section (4) is designed, at least in sections, with a rectangular or wedge-formed cross-section and that the blade section (5) extends along a longest edge of the carrier section (4).

10. Clamp arrangement according to one of the preceding claims, **characterised in that** retaining tongues (6, 7) attached at opposite ends of the main body (2) in each case have a profile in the form of a section of a circular ring, in particular a coaxial profile.

11. Clamp arrangement according to one of the preceding claims, **characterised in that** retaining tongues (6, 7) attached at opposite ends of the main body (2) are in each case formed with an undercut, in particular with a barb, adjacent to their respective cutting edge (10).

12. Setting tool system for handling a clamp arrangement (1) according to one of the claims 1 to 11, having a striking plate (48) which is designed to allow temporary fixing of the clamp arrangement (1) through form-locking engagement of the snap lugs (12) on an outer circumference (48) of the striking plate and which is connected with a grip handle (52), wherein the grip handle (52) and the striking plate (48) are designed such that a centre of gravity (53) of the setting tool (41) is arranged in the centre of the grip handle (52), with a clamp arrangement (1) according to one of the claims 1 to 11 and with a clamp magazine (42) which has a magazine shaft (43) designed to hold several clamp arrangements (1) in a stack arrangement as well as a spring-loading device (44) designed to deliver a first clamp arrangement (1) from the stack arrangement at a shaft opening (46).

13. Setting tool system according to claim 12, **characterised in that** a joint arrangement (50), in particular a ball-joint, is formed between the grip handle (52) and the striking plate (48).

14. Use of a setting tool system according to claim 12 to secure a cut surface of a tree trunk comprising the steps:
picking up a clamp arrangement (1) from the clamp magazine (42) with the setting tool (41) through form-locking engagement of the snap lugs (12) of the clamp arrangement (1) with the outer circumference of the striking plate (48), removing the clamp arrangement (1) from the clamp magazine (42) and
driving the clamp arrangement (1) into a cut surface of a tree trunk, in particular in such a way that retaining tongues (6, 7) attached to the main body (2) at a distance from one another come to lie on either side of a crack in the cut surface of the tree trunk and that the main body (2) spans the crack.

## Revendications

1. Ensemble formant attache pour des troncs d'arbre, avec un corps de base (2), au niveau duquel au moins trois languettes de maintien (6, 7, 18, 19) disposées à distance les unes des autres sont réalisées, dans lequel le corps de base (2) et les languettes de maintien (6, 7, 18, 19) sont orientés en tant que tranchants dans une direction de coupe (20) commune, et dans lequel au moins deux ergots d'enclenchement (12) pour une liaison amovible avec un appareil de pose sont réalisés au niveau du corps de base (2) et/ou au niveau d'au moins une languette de maintien (6, 7, 18, 19).

2. Ensemble formant attache selon la revendication 1, **caractérisé en ce que** les languettes de maintien (6, 7, 18,19) dépassent d'une surface la plus grande du corps de base (2).

3. Ensemble formant attache selon la revendication 1 ou 2, **caractérisé en ce que** le corps de base (2) et/ou la languette de maintien (6, 7, 18, 19) présentent une section de support (4) réalisée de manière prismatique et une section de coupe (5, 10, 23) jouxtant la section de support (4).

4. Ensemble formant attache selon la revendication 3, **caractérisé en ce que** la section de support (4) du corps de base (2) et/ou de la languette de maintien (6, 7, 18, 19) présente un côté étroit (11, 24, 25) opposée à la section de coupe (5, 10, 23), en particulier réalisé de manière plane, qui est réalisé pour imprimer des forces de coupe sur le corps de base (2) et/ou la languette de maintien (6, 7, 18, 19).

5. Ensemble formant attache selon la revendication 3 ou 4, **caractérisé en ce que** la section de coupe (5, 10, 23) présente un bord de coupe (26) réalisé en une forme ondulée et/ou un profilage (27, 28) réalisé en une forme ondulée.

6. Ensemble formant attache selon l'une quelconque des revendications précédentes, **caractérisé en ce que** l'ergot d'enclenchement (12) présente un profilage en forme de L, dans lequel une première branche de L (16) est orientée parallèlement à un côté étroit (11, 24, 25) du corps de base (2) et/ou de la languette de maintien (6, 7, 18, 19) et dans lequel une seconde branche de L (17) est pourvue d'une géométrie d'enclenchement (15) faisant saillie, profilée en particulier en forme de coin.

7. Ensemble formant attache selon l'une quelconque des revendications précédentes, **caractérisé en ce qu'**une languette de maintien (6, 7) installée du côté d'une extrémité au niveau du corps de base (2) réalise un profilage (30) au moins sensiblement en forme de T avec le corps de base (2), et/ou qu'une languette de maintien (18, 19) installée au niveau du corps de base (2) entre d'autres languettes de maintien (6, 7, 18, 19) réalise un profilage (31) en forme de T ou en forme de croix.

8. Ensemble formant attache selon l'une quelconque des revendications précédentes, **caractérisé en ce que** les ergots d'enclenchement (12) sont réalisés, en particulier respectivement par paire, au niveau de languettes de maintien (6, 7) installées du côté d'une extrémité en vis-à-vis au niveau du corps de base (2), disposées avec un espacement maximal les unes par rapport aux autres.

9. Ensemble formant attache selon l'une quelconque des revendications précédentes, **caractérisé en ce que** la section de support (4) est réalisée au moins par endroits avec une section transversale rectangulaire ou en forme de coin, et que la section de coupe (5) s'étend le long d'un bord le plus long de la section de support (4).

10. Ensemble formant attache selon l'une quelconque des revendications précédentes, **caractérisé en ce que** des languettes de maintien (6, 7) installées respectivement du côté d'une extrémité en vis-à-vis au niveau du corps de base (2) présentent respectivement un profilage en forme de section annulaire circulaire, en particulier coaxial.

11. Ensemble formant attache selon l'une quelconque des revendications précédentes, **caractérisé en ce que** des languettes de maintien (6, 7) installées respectivement du côté d'une extrémité en vis-à-vis au niveau du corps de base (2) sont réalisées de manière adjacente par rapport à leur bord de coupe (10) respectif avec une contre-dépouille, en particulier avec un barbillon.

12. Système d'appareil de pose avec un appareil de pose servant à transformer un ensemble formant attache (1) selon l'une quelconque des revendications 1 à 11, avec une plaque de percussion (48), qui est réalisée pour fixer temporairement l'ensemble formant attache (1) par enclenchement par complémentarité de forme des ergots d'enclenchement (12) au niveau d'une périphérie extérieure de plaque de percussion (48) et qui est reliée à un manche de préhension (52), dans lequel le manche de préhension (52) et la plaque de percussion (48) sont réalisés de telle manière qu'un centre de gravité (53) de l'appareil de pose (41) est disposé au centre dans le manche de préhension (52), ainsi qu'avec un ensemble formant attache (1) selon l'une quelconque des revendications 1 à 11 et avec un magasin d'attaches (42), qui présente un puits de magasin (43) servant à recevoir plusieurs ensembles formant attaches (1) selon un agencement d'empilement ainsi qu'un dispositif à ressort (44) servant à fournir un respectivement premier ensemble formant attache (1) de l'agencement d'empilement au niveau d'une ouverture de puits (46).

13. Système d'appareil de pose selon la revendication 12, **caractérisé en ce qu'**un ensemble d'articulation (50), en particulier une articulation à rotule, est réalisé entre le manche de préhension (52) et la plaque de percussion (48).

14. Utilisation d'un système d'appareil de pose selon la revendication 12 pour sécuriser une face de coupe d'un tronc d'arbre, avec les étapes de :
réception d'un ensemble formant attache (1) avec l'appareil de pose (41) depuis le magasin d'attaches (42) par enclenchement par complémentarité de forme des ergots d'enclenchement (12) de l'ensemble formant attache (1) avec la périphérie extérieure de la plaque de percussion (48), retrait de l'ensemble formant attache (1) du magasin d'attaches (42) et enfoncement de l'ensemble formant attache (1) dans une face de coupe d'un tronc d'arbre, en particulier de telle manière que des languettes de maintien (6, 7) installées à distance au niveau du corps de base (2) viennent à se trouver de part et d'autre d'une fissure dans la face de coupe du tronc d'arbre et que le corps de base (2) recouvre la fissure.
